# EUROPÄISCHE PATENTSCHRIFT

(11) **EP 0 666 131 B1**
(45) Veröffentlichungstag und Bekanntmachung des Hinweises auf die Patenterteilung: **29.10.1997**
(21) Anmeldenummer: 95100653.5
(22) Anmeldetag: 19.01.1995
(51) Int. Cl.: B23D 17/00, B23D 35/00

(54) **Schere für schwere Beanspruchungen, insbesondere Abbruch- bzw. Schrottschere**
Metal demolition shear
Cisaille à démolir les métaux

(30) Priorität: 03.02.1994 DE 9401815 U
(43) Veröffentlichungstag der Anmeldung: 09.08.1995
(73) Patentinhaber: Caterpillar Vibra-Ram GmbH & Co. KG, 66482 Zweibrücken (DE)
(72) Erfinder: Wack, Helmut, 66440 Blieskastel (DE)
(74) Vertreter: Dipl.-Ing. Heiner Lichti Dipl.-Phys. Dr.rer.nat. Jost Lempert Dipl.-Ing. Hartmut Lasch

(56) Entgegenhaltungen:
- DE-A- 4 201 352
- GB-A- 2 126 938
- US-A- 4 776 093

## Beschreibung

Die Erfindung betrifft eine Schere für schwere Beanspruchungen, insbesondere eine Abbruch- bzw. Schrottschere, mit zwei relativ zueinander verschwenkbaren Armen, von denen der untere Arm zwei in gegenseitigem Abstand sowie im wesentlichen parallel zueinander verlaufende Blätter aufweist, zwischen die ein Scherblatt des oberen Arms beim Schließen der Schere eintaucht, wobei an der einen Seitenfläche des Scherblattes des oberen Arms zumindest ein Schermesser angebracht ist, das mit zumindest einem Schermesser an einem der Blätter des unteren Armes beim Schließen der Schere zusammenwirkt, und wobei auf der dem Schermesser entgegengesetzten Seitenfläche des Scherblattes zumindest eine Verschleißplatte angeordnet ist, die beim Schließen der Schere mit dem anderen der Blätter des unteren Armes in Anlage kommt. Eine Schere dieser Art ist beispielsweise aus dem Dokument GB-A-2 126 938 bekannt.

Bei einer bekannten Abbruch- bzw. Schrottschere, die üblicherweise zum Anbau an den Stiel oder Ausleger eines Baggers oder eines ähnlichen Arbeitsgerätes vorgesehen ist, sind die Arme über ein Schwenklager miteinander verbunden und einer der Arme ist mittels eines Hydraulikzylinders betätigbar, wodurch die Schere geöffnet oder geschlossen werden kann. Der untere Arm besitzt zwei Blätter, die im wesentlichen parallel nebeneinander und unter einem gewissen gegenseitigen Abstand angeordnet sind. Aus Stabilitätsgründen sind die Blätter des unteren Arms in der Regel an ihrem vorderen Ende über eine quer verlaufende Platte miteinander fest verbunden.

Der obere Arm besitzt ein einzelnes Scherblatt, das beim Schließen der Schere in den Zwischenraum zwischen den beiden Blättern des unteren Arms eintaucht. Der Scherarm besitzt am unteren Abschnitt einer seiner Seitenflächen, d.h. nahe seiner dem unteren Arm zugewandten Scherkante zumindest ein Schermesser. Zumindest ein weiteres entsprechendes Schermesser ist an einem der Blätter des unteren Arms angeordnet und wirkt mit dem Schermesser des oberen Scherblattes derart zusammen, daß die Schermesser bei der Schließbewegung der Schere scherend aneinander vorbeilaufen, wobei das zwischen den Armen befindliche Bauteil, beispielsweise ein Träger, eine Leitung etc. durchtrennt wird.

Beim Durchtrennen eines Bauteils treten an den Blättern relativ große quer zur Schneidbewegung gerichtete Kräfte auf, die zu erheblichen Biegemomenten in dem Schwenklager der Arme führen können. Um diese Kräfte aufnehmen zu können, besteht der untere Arm in der o.g. Weise aus zwei voneinander beabstandeten Blättern. Bevor das zwischen den Armen befindliche Bauteil durchtrennt wird, taucht das obere Scherblatt mit seinem vorderen Bereich zwischen die beiden Blätter des unteren Arms ein. Nach dem Eintauchen werden die quergerichteten Kräfte von dem oberen Scherblatt auf das seitlich angrenzende Blatt des unteren Arms übertragen, so daß eine übermäßige Belastung des Schwenklagers vermieden ist.

Die quergerichteten Kräfte führen jedoch zu hohen Reibungskräften zwischen der dem Schermesser entgegengesetzten Seitenfläche des Scherblattes und der Innenfläche des zugeordneten Blattes des unteren Arms. Beim weiteren Schließen der Schere werden die Flächen unter Wirkung einer hohen Quer- bzw. Reibungskraft relativ zueinander bewegt, wodurch ein sehr hoher Verschleiß an den Flächen bzw. den entsprechenden Bauteilen auftritt. Es ist deshalb bekannt, auf der dem Schermesser entgegengesetzten Seitenfläche des Scherblattes eine Verschleißplatte anzuordnen. Da die Verschleißplatte bei Betrieb der Schere relativ hohe Kräfte aufnehmen muß, ist es für die Aufnahme und Ableitung dieser Kräfte notwendig, die Verschleißplatte mit dem Scherblatt fest zu verbinden, was durch Verschweißen erreicht wird.

Es hat sich gezeigt, daß die Verschleißplatte bereits bei zwei- oder dreiwöchigem Betrieb der Schere soweit abgenutzt bzw. verschlissen ist, daß sie ausgewechselt werden muß. Zu diesem Zweck muß die Schweißverbindung zwischen dem Scherarm und der Verschleißplatte gelöst werden, was relativ aufwendig ist. Vor dem Aufsetzen einer neuen Verschleißplatte muß die Seitenfläche des Scherarms zunächst vorbearbeitet werden, bevor dann die neue Verschleißplatte aufgeschweißt werden kann. Auf diese Weise ist das Auswechseln der Verschleißplatte zeitaufwendig und kostenintensiv.

Der Erfindung liegt die Aufgabe zugrunde, eine Schere der genannten Art zu schaffen, bei der eine sichere Kraftübertragung zwischen der Verschleißplatte und dem Scherarm gewährleistet ist und die Verschleißplatte in einfacher Weise auswechselbar ist.

Diese Aufgabe wird erfindungsgemäß bei einer Schere der genannten Art dadurch gelöst, daß die Verschleißplatte auf ihrer der Seitenfläche des Scherblattes zugewandten Oberfläche einen Vorsprung aufweist, mit dem sie paßgenau in eine entsprechend ausgebildete Ausnehmung des Scherblattes eingesetzt ist, und daß die Verschleißplatte über Schrauben an dem Scherblatt befestigt ist.

Die Befestigung der Verschleißplatte an dem Scherblatt über Schrauben gewährleistet eine schnelle und einfache Auswechselbarkeit der Verschleißplatte. Es hat sich jedoch gezeigt, daß eine Schraubverbindung alleine nicht in Lage ist, die sehr großen, bei Betrieb der Schere auf die Verschleißplatte einwirkenden Kräfte aufzunehmen und abzuleiten, da die Querschnittsfläche der Schrauben für diesen Zweck zu gering ist. Zusätzlich ist deshalb vorgesehen, daß zumindest ein Teil der auf die Verschleißplatte einwirkenden Kräfte über einen formschlüssigen Eingriff des an der Verschleißplatte ausgebildeten Vorsprungs in eine entsprechend ausgebildete Ausnehmung des Scherblattes übertragen wird. Auf diese Weise ist es möglich, die von den Schrauben aufzunehmenden Kräfte soweit zu verringern, daß ein Abreißen der Schrauben während des Betriebs der Schere vermieden ist.

Es hat sich als vorteilhaft erwiesen, an der Verschleißplatte einen sich im wesentlichen über deren gesamte Länge erstreckenden Vorsprung vorzusehen, da somit eine relativ große Fläche für die Kraftübertragung zwischen der Verschleißplatte und dem Scherblatt gegeben ist.

Eine einfache Herstellung sowohl der Ausnehmung als auch des Vorsprungs unter gleichzeitiger guter Kraftübertragung zwischen den Bauteilen kann erreicht werden, wenn der Vorsprung und die Ausnehmung einen im wesentlichen rechteckigen Querschnitt aufweisen.

Um erfindungsgemäß einen spielfreien paßgenauen Sitz des Vorsprungs in der Ausnehmung zu erreichen, werden die entsprechenden Oberflächen und insbesondere Kontaktflächen plan gefräst.

Zum Auswechseln einer verbrauchten bzw. verschlissenen Verschleißplatte brauchen bei der erfindungsgemäßen Schere lediglich die Schrauben gelöst und die Verschleißplatte von dem Scherblatt abgenommen zu werden. Anschließend wird eine neue Verschleißplatte mit ihrem Vorsprung in die entsprechend ausgebildete Ausnehmung des Scherblattes paßgenau eingesetzt und durch Anziehen der Schrauben an diesem befestigt.

Es ist möglich, auf der Seitenfläche des Scherblattes eine einzelne Verschleißplatte anzuordnen, die den gesamten, beim Eintauchen des Scherblattes in den Zwischenraum der Blätter des unteren Arms auf Reibung beanspruchten Bereich abdeckt. Es hat sich jedoch gezeigt, daß die großen Reibungsbelastungen in derjenigen Phase des Schließens der Schere auftreten, in der mit dem Durchtrennen des Bauteils begonnen wird. Mit anderen Worten bedeutet dies, daß in der vollständig geschlossenen Stellung der Schere, in der sich zwischen den Armen kein Bauteil mehr befinden kann, praktisch keine quergerichtete, Reibung verursachende Kraft auftritt. Erfindungsgemäß ist deshalb vorgesehen, zwei Verschleißplatten auf der Seitenfläche des Scherarms übereinander anzuordnen. Eine erste untere Verschleißplatte wird nahe der Scherkante des Scherarms angeordnet und in oben beschriebener Weise mittels der Schrauben und des Eingriffs des Vorsprungs in die Ausnehmung auswechselbar gehalten. Eine zweite obere Verschleißplatte, die oberhalb der ersten Verschleißplatte angeordnet ist, ist aus den oben genanten Gründen einer wesentlich geringeren Abnutzung unterworfen, so daß sie in wesentlich größeren Intervallen ausgewechselt werden muß. Es kann vorgesehen sein, die zweite Verschleißplatte ebenfalls in der o.g. Weise auswechselbar zu lagern, vorzugsweise ist jedoch vorgesehen, die zweite Verschleißplatte mit dem Scherarm zu verschweißen.

Auf der der Verschleißplatte entgegengesetzten Seitenfläche des Scherarms ist das Schermesser angeordnet. Auch das Schermesser nutzt sich im Laufe der Zeit ab und muß ausgewechselt werden. In bevorzugter Ausgestaltung der Erfindung ist deshalb vorgesehen, daß das Schermesser auf seiner der Seitenfläche des Scherblattes zugewandten Oberfläche einen Vorsprung aufweist, mit dem es paßgenau in eine entsprechend ausgebildete Ausnehmung des Scherblattes eingesetzt ist, und daß das Schermesser über Schrauben an dem Scherblatt befestigt ist. Auf diese Weise ist auch für das Schermesser eine der Verschleißplatte vergleichbare auswechselbare Lagerung erreicht, wodurch einerseits eine sichere Kraftübertragung zwischen dem Schermesser und dem Scherarm gewährleistet ist und das Schermesser in einfacher Weise ausgewechselt werden kann.

In bevorzugter Ausgestaltung der Erfindung ist vorgesehen, daß das Schermesser und die Verschleißplatte mittels gemeinsamer, das Scherblatt durchdringender Schrauben befestigt sind. Auf diese Weise kann der konstruktive Aufwand gering gehalten werden. Darüber hinaus ist es relativ schnell möglich, sowohl die Verschleißplatte als auch das Schermesser auszuwechseln.

Damit die Schrauben das Eintauchen des Scherblattes in den Zwischenraum zwischen den Blättern des unteren Arms nicht behindern, muß gewährleistet sein, daß die Schrauben nicht über die Oberflächen der Verschleißplatte bzw. des Schermessers vorstehen. Zu diesem Zweck ist erfindungsgemäß vorgesehen, daß der Kopf der Schrauben in der Verschleißplatte oder dem Schermesser versenkt ist, während die auf die Schraube aufgeschraubte Mutter in einer Ausnehmung des entsprechend anderen Bauteils angeordnet ist.

Weitere Einzelheiten und Merkmale der Erfindung sind aus der folgenden Beschreibung eines Ausführungsbeispiels unter Bezugnahme auf die Zeichnung ersichtlich. Es zeigen:
- Figur 1: den vorderen Bereich einer Schere in perspektivischer Darstellung und
- Figur 2: einen Schnitt durch das vordere Ende des Scherarms.

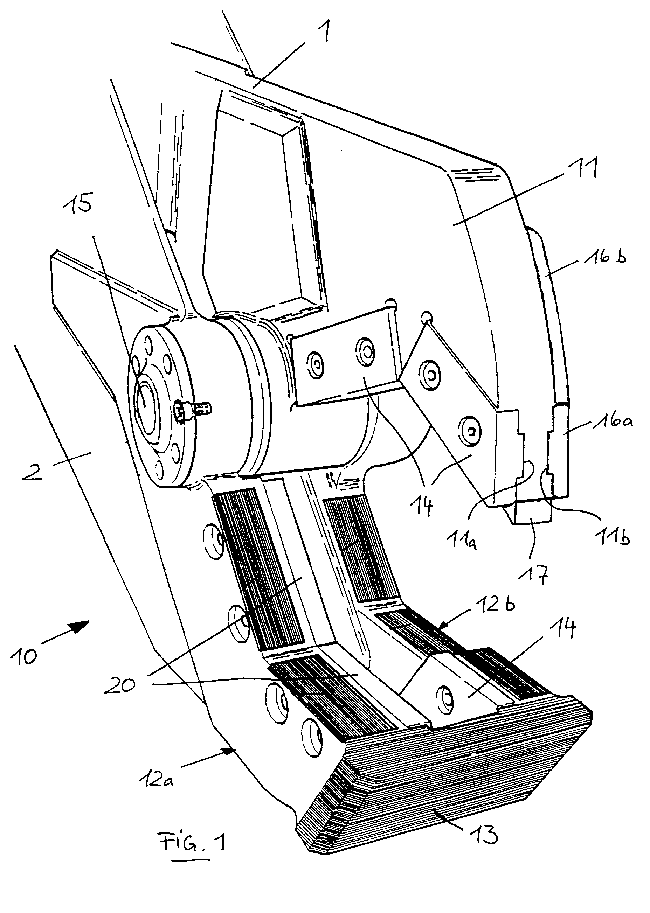

Eine Abbruch- bzw. Schrottschere 10 weist gemäß Figur 1 einen oberen Arm 1 auf, dessen vorderes Ende als plattenförmiges Scherblatt 11 ausgebildet ist. Der obere Arm 1 ist über einen Schwenkzapfen 15 mit einem unteren Arm 2 schwenkbar verbunden. Der untere Arm 2 besitzt in seinem vorderen Abschnitt zwei im wesentlichen parallel und unter gegenseitigem Abstand angeordnete Blätter 12a und 12b, die an ihrem vorderen freien Ende mittels einer quer verlaufenden Platte 13 verbunden sind. Wenn der obere Arm 1 relativ zu dem unteren Arm 2 mittels eines nicht dargestellten Hydraulikzylinders in bekannter Weise verschwenkt wird, taucht das Scherblatt 11 in den Zwischenraum zwischen den beiden unteren Blättern 12a und 12b ein, so daß die Schere wahlweise geöffnet oder geschlossen werden kann. Auf der gemäß Figur 1 rechten Seitenfläche des Scherblattes 11 sind an dessen unterer Kante zwei hintereinander angeordnete Schermesser 14 befestigt. Die Schermesser 14 wirken mit unteren Schermessern 20 zusammen, die auf der Innenseite des unteren Blattes 12a angebracht sind. Beim Schließen der Schere laufen die Schermesser 14 bzw. 20 scherend aneinander vorbei, wodurch ein zwischen den Armen befindliches Bauteil durchtrennt werden kann.

Auf der den Schermessern 14 entgegengesetzten Seitenfläche des Scherarms 11 sind zwei Verschleißplatten 16a und 16b angeordnet. Wenn das Scherblatt 11 mit seinem vorderen, eine Verschleißspitze 17 tragenden Ende in den Zwischenraum zwischen den beiden Blättern 12a und 12b des unteren Arms 2 eintaucht, kommen die Verschleißplatten 16a bzw. 16b mit einer auf der Innenseite des unteren Blattes 12b angeordneten Druckplatte 14 in Anlage, wodurch der Scherarm 11 bei der Schließbewegung der Schere sicher geführt ist.

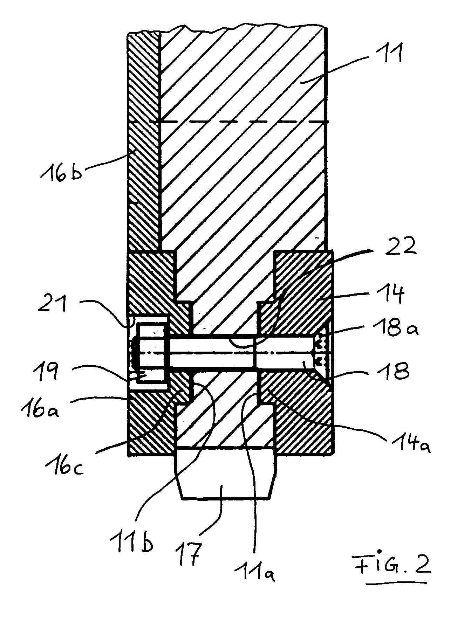

Die obere, d.h. der Scherkante des Scherarms 11 entfernt liegende Verschleißplatte 16b ist in bekannter Weise auf den Scherarm 11 aufgeschweißt. Sowohl die untere Verschleißplatte 16a als auch die Schermesser 14 sind mittels einer Schraubbefestigung gehalten, wie insbesondere in Figur 2 dargestellt ist.

Die Verschleißplatte 16a besitzt auf ihrer dem Scherblatt 11 zugewandten Oberfläche einen rechteckförmigen Vorsprung 16c, der sich im wesentlichen über die gesamte Länge der Verschleißplatte 16a erstreckt. Auf ihrer Außenseite ist in der Verschleißplatte 16a eine Ausnehmung 21 zur Aufnahme einer Mutter 19 vorgesehen.

Auf der der Verschleißplatte 16a zugeordneten Seitenfläche des Scherblattes 11 ist eine Ausnehmung bzw. Nut 11b ausgebildet, in die die Verschleißplatte 16a mit dem Vorsprung 16c paßgenau eingesetzt ist, wie in Figur 2 gezeigt ist.

Das Schermesser 14 weist auf seiner dem Scherblatt 11 zugewandten Oberfläche ebenfalls einen rechteckförmigen Vorsprung 14a auf, der unter enger Paßung in eine auf der zugeordneten Seitenfläche des Scherblattes 11 ausgebildete Ausnehmung oder Nut 11a eingesetzt ist. Auf seiner Außenseite weist das Schermesser eine konische Vertiefung zur Aufnahme eines Schraubenkopfes auf.

In eine die Verschleißplatte 16a, das Scherblatt 11 und das Schermesser 14 durchdringende Durchgangsbohrung 22 ist eine Spannschraube 18 eingesetzt, deren Kopf 18a in der konischen Vertiefung auf der Außenseite des Schermessers 14 aufgenommen ist. Auf das freie Ende der Spannschraube 18 ist eine Mutter aufgeschraubt, die in der Ausnehmung 21 auf der Außenseite der Verschleißplatte 16a angeordnet ist. Durch Anziehen der Spannschraube 18 werden die Verschleißplatte 16a und das Schermesser 14 gegen das Scherblatt 11 gespannt und an diesem gehalten.

## Patentansprüche

1. Schere (10) für schwere Beanspruchungen, insbesondere Abbruch- bzw. Schrottschere, mit zwei relativ zueinander verschwenkbaren Armen (1,2), von denen der untere Arm (2) zwei in gegenseitigem Abstand sowie im wesentlichen parallel zueinander verlaufende Blätter (12a,12b) aufweist, zwischen die ein Scherblatt (11) des oberen Arms (1) beim Schließen der Schere (10) eintaucht, wobei an der einen Seitenfläche des Scherblattes des oberen Arms zumindest ein Schermesser (14) angebracht ist, das mit zumindest einem Schermesser (20) an einem der Blätter (12a,12b) des unteren Arms (2) beim Schließen der Schere (10) zusammenwirkt, und wobei auf der dem Schermesser (14) entgegengesetzten Seitenfläche des Scherblattes (11) zumindest eine Verschleißplatte (16a) angeordnet ist, die beim Schließen der Schere (10) mit dem anderen (12b) der Blätter des unteren Arms (2) in Anlage kommt, dadurch gekennzeichnet, daß die Verschleißplatte (16a) auf ihrer der Seitenfläche des Scherblattes (11) zugewandten Oberfläche einen Vorsprung (16c) aufweist, mit dem sie paßgenau in eine entsprechend ausgebildete Ausnehmung (11b) des Scherblattes (11) eingesetzt ist, und daß die Verschleißplatte (16a) über Schrauben (18) an dem Scherblatt (11) befestigt ist.

2. Schere nach Anspruch 1, dadurch gekennzeichnet, daß der Vorsprung (16c) sich im wesentlichen über die gesamte Länge der Verschleißplatte (16a) erstreckt.

3. Schere nach Anspruch 1 oder 2, dadurch gekennzeichnet, daß der Vorsprung (16c) und die Ausnehmung (11b) einen im wesentlichen rechteckigen Querschnitt aufweisen.

4. Schere nach einem der Ansprüche 1 bis 3, dadurch gekennzeichnet, daß mehrere Verschleißplatten (16a,16b) vorgesehen sind.

5. Schere nach Anspruch 4, dadurch gekennzeichnet, daß eine erste, nahe der Scherkante des Scherarms (11) angeordnete Verschleißplatte (16a) mittels der Schrauben (18) auswechselbar gehalten ist, während eine oberhalb davon angeordnete zweite Verschleißplatte (16) mit dem Scherarm (11) verschweißt ist.

6. Schere nach einem der Ansprüche 1 bis 5, dadurch gekennzeichnet, daß das am Scherblatt (11) angebrachte Schermesser (14) auf seiner der Seitenfläche des Scherblattes (11) zugewandten Oberfläche einen Vorsprung (14a) aufweist, mit dem es paßgenau in eine entsprechend ausgebildete Ausnehmung (11a) des Scherblattes (11) eingesetzt ist, und daß das Schermesser (14) über Schrauben (18) an dem Scherblatt (11) befestigt ist.

7. Schere nach Anspruch 6, dadurch gekennzeichnet, daß das Schermesser (14) und die Verschleißplatte (16a) mittels gemeinsamer, das Scherblatt (11) durchdringender Schrauben (18) befestigt sind.

8. Schere nach Anspruch 7, dadurch gekennzeichnet, daß ein Kopf (18a) der Schrauben (18) versenkt ist.

9. Schere nach Anspruch 7 oder 8, dadurch gekennzeichnet, daß die auf die Schraube (18) aufgeschraubte Mutter (20) in einer Ausnehmung (21) der Verschleißplatte (16a) oder der Schermessers (14) angeordnet ist.

## Claims

1. Shear (10) for high stresses, particularly demolition or scrap shear, with two arms (1, 2) pivotable relative to one another and whereof the lower arm (2) has two mutually spaced blades (12a, 12b), which are substantially parallel to one another and between which is introduced one shear blade (11) of the upper arm (1) on closing the shear (10), at least one shear knife (14) being fitted to one lateral face of the shear blade of the upper arm and which cooperates with at least one shear knife (20) on one of the blades (12a, 12b) of the lower arm (2) on closing the shear (10), and in which on the lateral face of the shear blade (11) opposite to the shear knife (14) is located at least one wearing plate (16a), which on closing the shear (10) comes into contact with the other (12b) of the blades of the lower arm (2), characterized in that the wearing plate (16a) has on its surface facing the lateral face of the shear blade (11) a projection (16c), with which it is inserted in accurately fitting manner into a correspondingly constructed recess (11b) of the shear blade (11) and that the wearing plate (16a) is fixed by means of screws (18) to the shear blade (11).

2. Shear according to claim 1, characterized in that the projection (16c) extends substantially over the entire length of the wearing plate (16a).

3. Shear according to claim 1 or 2, characterized in that the projection (16c) and recess (11b) have a substantially rectangular cross-section.

4. Shear according to one of the claims 1 to 3, characterized in that there are several wearing plates (16a, 16b).

5. Shear according to claim 4, characterized in that a first wearing plate (16a) positioned close to the shear edge of the shear arm (11) is replaceably held by means of screws (18), whilst a second wearing plate (16) positioned above the same is welded to the shear arm (11).

6. Shear according to one of the claims 1 to 5, characterized in that the shear knife (14) fitted to the shear blade (11) has on its surface facing the lateral face of the shear blade (11) a projection (14a) with which it is inserted in accurately fitting manner into a correspondingly constructed recess (11a) of the shear blade (11) and that the shear knife (14) is fixed by means of screws (18) to the shear blade (11).

7. Shear according to claim 6, characterized in that the shear knife (14) and wearing plate (16a) are fixed by means of common screws (18) penetrating the shear blade (11).

8. Shear according to claim 7, characterized in that a head (18a) of the screws (18) is flush.

9. Shear according to claim 7 or 8, characterized in that the nut (20) screwed onto the screw (18) is located in a recess (21) of the wearing plate (16) or shear knife (14).

## Revendications

1. Cisaille (10) pour gros travaux, en particulier cisaille de démolition et de découpe des ferrailles, comprenant deux bras (1,2) pivotant l'un par rapport à l'autre, dont le bras inférieur (2) présente deux lames (12a,12b) s'étendant à distance et sensiblement parallèles l'une à l'autre, entre lesquelles plonge une lame (11) du bras supérieur (1) lorsque la cisaille se ferme, un couteau (14) au moins étant monté sur une des surfaces latérales de la lame du bras supérieur, coopérant avec au moins un couteau (20) fixé à l'une des lames (12a,12b) du bras inférieur lorsque la cisaille se ferme, et une plaque d'usure (16a) au moins étant fixée à la surface latérale de la lame (11) opposée au couteau, plaque venant en contact avec l'autre (12b) lame du bras inférieur (2) lorsque la cisaille (10) se ferme, caractérisée en ce que la plaque d'usure (16a) présente sur sa face supérieure en regard de la surface latérale de la lame (11) une saillie (16c) par laquelle elle est logée à ajustement dans un évidement correspondant (11b) conformé dans la lame (11), et en ce que la plaque d'usure (16a) est fixée à la lame (11) par des vis (18).

2. Cisaille selon la revendication 1, caractérisée en ce que la saillie (16c) s'étend sensiblement sur toute la longueur de la plaque d'usure (16a).

3. Cisaille selon l'une quelconque des revendications 1 ou 2, caractérisée en ce que la saillie (16c) et l'évidement (11b) présentent une section sensiblement rectangulaire.

4. Cisaille selon l'une quelconque des revendications 1 à 3, caractérisée en ce que l'on prévoit plusieurs plaques d'usure (16a,16b).

5. Cisaille selon la revendication 4, caractérisée en ce qu'une première plaque d'usure (16a) disposée à proximité de l'arête du bras de cisaillement (11) est maintenue interchangeable au moyen des vis (18), tandis qu'une deuxième plaque d'usure (16) disposée en amont est soudée au bras de cisaillement (11).

6. Cisaille selon l'une quelconque des revendications 1 à 5, caractérisée en ce que le couteau (14) monté sur la lame (11) présente sur sa face supérieure en regard de la surface latérale de la lame (11) une saillie (14a) par laquelle il est logé à ajustement dans un évidement (11a) correspondant conformé dans la lame (11), et en ce que le couteau (14) est fixé à la lame (11) par des vis (18).

7. Cisaille selon la revendication 6, caractérisée en ce que le couteau (14) et la plaque d'usure (16a) sont fixés par des vis (18) communes traversant la lame (11).

8. Cisaille selon la revendication 7, caractérisée en ce que la tête (18a) des vis (18) est en retrait.

9. Cisaille selon l'une quelconque des revendications 7 ou 8, caractérisée en ce que l'écrou (20) vissé sur la vis (18) est disposé dans un évidement (21) de la plaque d'usure (16a) ou du couteau (14).
